# EUROPEAN PATENT APPLICATION

(11) **EP 4 008 752 A1**
(43) Date of publication of application: **08.06.2022**
(21) Application number: 20211582.0
(22) Date of filing: 03.12.2020
(51) Int. Cl.: C08L 95/00, C08L 97/00, E01C 7/18, E01C 19/10

(54) **METHOD FOR PRODUCING AN ASPHALT MIX CONTAINING LIGNIN AND AN ASPHALT COMPOSITION PRODUCED THEREBY**

(71) Applicant: Peab Asfalt AB, 262 24 Ängelholm (SE)
(72) Inventor: Jansson, Lars, 141 63 Huddinge (SE); Wendel, Mats, 752 23 Uppsala (SE)
(74) Representative: Hansson Thyresson AB

(57) **Abstract**

A method for producing asphalt mix in an asphalt plant (10) is provided. The method comprises the steps of providing (100; 200; 300) reclaimed asphalt material; providing (103; 201; 301) lignin having a moisture content of approximately 10-60% by weight; heating (101; 202; 302) the reclaimed asphalt material and the lignin; and mixing (104; 204; 303) the reclaimed asphalt material and the lignin with crushed stone material and bitumen to form asphalt mix.

## Description

### TECHNICAL FIELD

The present invention relates to a method for producing asphalt mix and an asphalt composition produced thereby.

### BACKGROUND

Asphalt is a very common material for road surfaces. Sustainability is an important factor in society and for all product development, including the asphalt production. Since conventional asphalt contains the fossil component bitumen, there is potential for making asphalt more sustainable. In order to make the asphalt more environmentally sustainable it is known to replace a fraction of the fossil bitumen with lignin, which is a residual product of for example pulp production or from the production of biofuel from forests. A problem with the use of lignin is that it does not have the same properties as bitumen, not in the production process and not in the finished product. Therefore, it is not possible to directly replace the bitumen with lignin in the production process of asphalt.

From the above it is understood that there is room for improvements and the invention aims to solve or at least mitigate the above and other problems.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein. In a first aspect, a method for producing asphalt mix in an asphalt plant is provided. The method comprises the steps of providing reclaimed asphalt material; providing lignin having a moisture content of approximately 10-60% by weight; heating the reclaimed asphalt material and the lignin; and mixing the reclaimed asphalt material and the lignin with crushed stone material and bitumen to form asphalt mix. This method is advantageous in that it utilizes lignin with a high moisture content, without requiring any pretreatment for removing the moisture. There are several advantages in using moist lignin, for example in that the lignin may be used in its raw, original state. It is energy efficient not to dry the lignin before use, which improves the carbon foot-print for the production method. It is also advantageous in that moist lignin is easier and safer to handle compared to dry lignin, which is explosive and dusts a lot. Further, the moist lignin shows improved mixing properties compared to dry lignin, and asphalt mix produced by the method has improved compaction properties.

In one embodiment, the method comprises the steps of feeding the reclaimed asphalt material into one of a parallel drum or a mixer of the asphalt plant, feeding the lignin into one of the parallel drum or the mixer and possibly feeding the reclaimed asphalt material and/or the lignin to the mixer, and wherein the step of mixing takes place in the mixer.

In one embodiment, the moisture content of the lignin is preferably 20-50% by weight, and more preferred 30-40% by weight. This is an advantageous amount of moisture content considering the original state of the produced lignin, the ability to mix with the other constituents and the ability to form a durable asphalt mix.

In one embodiment, the step of heating comprises heating the material provided in the parallel drum to a temperature of 140-160°C. This is an advantageous temperature for forming asphalt mix.

In one embodiment, the lignin is provided into the mixer, the bitumen comprises soft bitumen, and the step of heating comprises heating the material in the mixer to a temperature of between 80-100°C. Soft bitumen is advantageous to use since it is self-healing in a paving and since a lower production temperature, compared to asphalt produced comprising regular bitumen, may be used, since soft bitumen has a lower viscosity compared to regular bitumen. The production process is thus less energy consuming.

In one embodiment, the method comprises a step of providing an active adhesive agent for forming an adhesion between the reclaimed asphalt material and the lignin. Asphalt comprising lignin may have lower water sensitivity and impaired adhesion properties compared to traditionally produced asphalt. The active adhesion agent has a property of acting adhesive also in the presence of moisture. Addition of the active adhesive agent improves the water sensibility and the adhesion properties of the produced asphalt mix.

In one embodiment, the active adhesive agent is one of amines or diamines or a combination thereof. These are efficient for forming adhesion between bitumen and stone material, also when the materials are moist.

In one embodiment, the active adhesive agent is added in an amount of 0.02-0.1 % by weight of the total asphalt mix. This is a preferred amount of active adhesion agent for forming an advantageous bond between the materials.

In one embodiment, the lignin is added in a ratio of 0.5-3% by weight of the total asphalt mix. This is a preferred amount of lignin, substituting a portion of the bitumen, at the same time providing an equally durable asphalt paving, compared to traditionally produced asphalt.

In one embodiment, the lignin is added as a replacement for a part of the bitumen for reducing the amount of material of petroleum origin. Preferably 5-50%, more preferred 10-30%, and most preferred 10-20% by weight of the bitumen is replaced by lignin. This is advantageous in that the produced asphalt is more environmentally sustainable due to a lower content of fossil components.

In one embodiment, the method comprises the steps of feeding reclaimed asphalt material to the parallel drum, heating said reclaimed asphalt material in the parallel drum by means of the heater, feeding said heated reclaimed asphalt material to the mixer, and feeding said lignin to the mixer.

In one embodiment, the method comprises the steps of feeding said reclaimed asphalt material to the parallel drum, feeding said lignin to the parallel drum, heating said reclaimed asphalt material and said lignin in the parallel drum by means of the heater, and feeding said heated reclaimed asphalt material and said heated lignin to the mixer. An advantage of adding the lignin to the parallel drum is that the mixing is improved, especially in that the lignin is less prone to form clumps. Another advantage in adding the lignin into the parallel drum is that part of the moisture content in the lignin is evaporated during heating in the parallel drum. Thus, a smaller portion lignin needs to be added in order to replace the removed bitumen, since the volume shrinks during heating in the parallel drum. It also results in that a larger fraction of the bitumen may be replaced by lignin. At the same time, no pre-heating process in order to remove excess moisture is required.

In one embodiment, the method comprises the steps of feeding said reclaimed asphalt to the mixer, feeding said lignin to the mixer, heating said reclaimed asphalt material and said lignin in the mixer (21), and mixing said reclaimed asphalt material and said lignin in the mixer. This method is advantageous when the asphalt plant is not equipped with a parallel drum.

In a second aspect, an asphalt composition is provided, comprising stone material, bitumen and lignin, wherein the lignin has a moisture content of 10-60% by weight. This is an advantageous asphalt composition in that it is more sustainable compared to conventional asphalt mix.

In one embodiment, the moisture content of the lignin preferably is 20-50% by weight and most preferred approximately 30-40% by weight. This moisture content is advantageous in that the lignin mixes better with the other components of the asphalt mix and in that the asphalt mix shows improved compaction properties.

In one embodiment, the lignin constitutes 0.5-3% by weight of the composition. This is an advantageous amount providing improved compaction properties, and improved mixing properties.

In one embodiment, the amount of lignin is adjusted to replace a portion of the bitumen corresponding to 5-50%, preferably 10-30%, most preferred 10-20% by weight of the bitumen. This amount is advantageous in that it substitutes a significant portion of the bitumen, at the same time as the mixing and compaction properties are maintained or improved.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic top view of an asphalt plant according to one embodiment;
- Fig. 2: is a flowchart of a method for producing asphalt mix;
- Fig. 3: is a flowchart of a method for producing asphalt mix; and
- Fig. 4: is a flowchart of a method for producing asphalt mix.

Further, in the figures like reference characters designate like or corresponding parts throughout the figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

An object is to achieve a sustainably produced asphalt by substituting at least a portion of the fossil component bitumen with lignin, which is a residual product of e.g. bio-fuel production or pulp production. The lignin preferably originates from bio-fuel production, but it may also originate from pulp production, or any other suitable production.

One problem of exchanging a fraction of the bitumen for lignin is the production process. When lignin is generated, it has a high level of moisture, in the order of 10-60%, commonly around 40-50% moisture. In order to simplify the asphalt production process, and due to sustainability reasons, it is desired not to extensively dry the lignin before it is added to the asphalt mix. By not drying the lignin extensively, energy is saved. Further, lignin with a low level of moisture is both dusty and explosive, which can be a safety or health problem.

Unfortunately, the high level of moisture may cause other problems. For example, during mixing of lignin and bitumen under a high temperature, the bitumen starts to boil, resulting in a fast and substantial expansion. It is thus unsuitable to use the lignin with a high moisture content in an industrial production of bitumen-lignin blend for asphalt purpose.

In the case of dried lignin, containing approximately 3-5% moisture, the lignin mixes well with the bitumen, but the mixture is not stable. If the mixture is stored, it separates quickly into the constituents, which makes it unsuitable for industrial production.

Further, lignin contains cellulose which in combination with moisture provides a favourable environment for mold growth, which poses a problem when storing moist lignin.

With reference e.g. to the above mentioned problems, the inventors have, after inventive thinking, concluded that it is not favourable, or suitable to mix the lignin into the bitumen. Instead, in their inventive production process, the high moisture lignin is mixed into the asphalt mix in the asphalt plant. This process will be further described below.

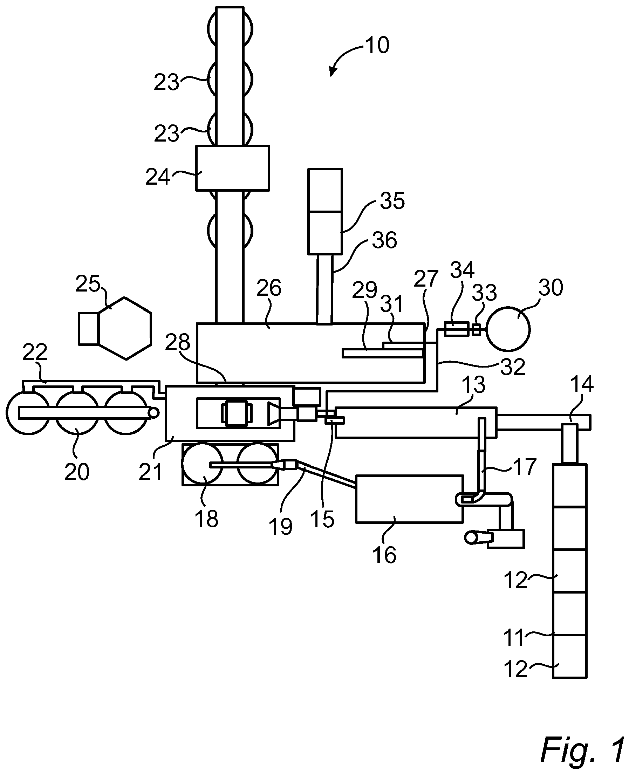

With reference to Fig. 1, an asphalt plant 10 is schematically illustrated. The asphalt plant 10 is designed for the production of asphalt mix. The asphalt plant 10 is designed to mix crushed stone material with binders to produce the asphalt mix. The asphalt plant 10 is designed to produce asphalt mix for road surfaces. For example, the asphalt plant is designed for the production of asphalt for one or more of: wear layers, base layers, bind layers, and/or top layers. For example, the asphalt plant 10 is designed for the production of asphalt mix for asphalt concrete, rubber asphalt and the like. The asphalt plant 10 is, for example, a stationary asphalt plant. Thus, according to one embodiment, the asphalt plant 10 is a fixed installation. Alternatively, the asphalt plant is a mobile asphalt plant. For example, the asphalt plant is a batch mixing plant for batch production of asphalt mixture. The asphalt plant is preferably designed to use a portion of reclaimed asphalt pavement (RAP), also referred to as re-used asphalt, recycled asphalt or return asphalt, in the production of asphalt mix. Preferably approximately 0-80% of the produced asphalt mix comprises reclaimed asphalt, more preferably 10-70%, most preferred 20-60%.

The asphalt plant 10 comprises a cold dosing unit 11 for storage and dosing of crushed stone material. In the embodiment shown, the cold dosing unit 11 comprises a plurality of dosing compartments 12 for different fractions of crushed stone material. The cold dosing unit 11 is connected to a drying drum 13 for drying the crushed stone material. For example, the cold dosing unit 11 is connected to the drying drum 13 via a conveyor belt 14 or the like, so that rock material can be transported from the cold dosing unit 11 to the drying drum 13. For example, the drying drum 13 is provided with a burner 15 for burning fuel while heating stone material and drying thereof. For example, the asphalt plant 10 comprises a dust separator 16 for separating fine material, dust and possible purification of flue gases from the drying drum 13. In the embodiment shown, the dust separator 16 is connected to the drying drum 13 via a flue gas duct 17 or equivalent in a conventional manner. In the embodiment shown, the dust collector 16 is connected to a filler silo 18, for example via a transport conduit 19 in a conventional manner, so that the material separated by the dust collector 16 can be stored and used as filling material in the production of the asphalt mix.

The asphalt plant 10 comprises at least one binder tank 20 for storing binders, such as bitumen, and a mixer 21 for mixing crushed stone material with binder and optionally other additives, such as filler material, dye, rubber or other additives, to be further specified below, to form asphalt mix. The binder tank 20 is connected to the mixer 21 via a conduit 22, for example in a conventional manner, so that the binder can be passed from the binder tank 20 to the mixer 21. For example, the asphalt plant 10 comprises a mixer tower with the mixer 21 and a lift for stone material and/or a screen for sifting the stone material to different fractions and/or hot stone compartments for storing hot stone material and/or a scale for weighing the stone material before it is fed to the mixer 21. In the embodiment shown, the asphalt plant 10 comprises storage compartments 23 for storing the asphalt mix produced. For example, the asphalt plant 10 comprises a device 24 for transferring asphalt mix from the mixer 21 to the storage compartments 23, which device 24 is designed, for example, as a pipe, a transport screw, a trolley (also called a dog) or the like. In the embodiment shown in Fig. 1, the device 24 is designed as a dog. For example, the asphalt plant 10 comprises a control cabin 25 for controlling and monitoring the asphalt plant 10.

The asphalt plant 10 comprises a parallel drum 26 for treating crushed reclaimed asphalt in the form of asphalt granules, so that the asphalt granules can be fed to the mixer 21 and form part of the asphalt mix produced. Thus, the parallel drum 26 is designed so that reclaimed asphalt can be mixed into asphalt mix or other components included in the asphalt mix to form an asphalt mix comprising one part reclaimed asphalt. Such reclaimed asphalt is, for example, recycled asphalt from previous road pavements that have been milled or crushed. Thus, the parallel drum 26 is formed with an inlet 27 for asphalt granules, and an outlet 28 for heated asphalt granules. The inlet 27 and the outlet 28 of the parallel drum 26 are schematically marked in the figures. For example, the inlet 27 and the outlet 28 are arranged substantially at opposite ends of the parallel drum 26. For example, the parallel drum 26 is a rotating drum for transporting asphalt granules arranged therein from the inlet 27, through the parallel drum 26 in a longitudinal direction thereof, and to the outlet 28. The rotary drum 26 is in the embodiment shown arranged parallel to the drying drum 13 but can also be positioned in a different configuration in relation to the drying drum 13. The term parallel drum thus does not come from the direction of the parallel drum but from the function in that it acts parallel to the drying drum 13. For example, the parallel drum 26 is arranged separately from the drying drum 13.

According to one embodiment, the parallel drum 26 is connected to a storage unit for asphalt granules, which storage unit is not shown in the figures. For example, the storage unit is designed in a conventional manner in the form of a ground compartment, a silo, or the like. The parallel drum 26 is connected to the storage unit via a transport device, which transport device is not shown in the figures. For example, the conveyor device comprises a conveyor belt, conveyor screw, elevator or the like or a combination thereof, so that asphalt granules can be transported from the storage unit to the parallel drum 26 if necessary.

A heater or burner 29 is arranged to heat the asphalt granules in the parallel drum 26. For example, the burner 29 is arranged wholly or partly inside the parallel drum 26. The burner 29 is for instance formed in the form of a burner lance with a tube and a nozzle for injecting fuel for combustion thereof during heating of asphalt granules arranged in the parallel drum 26. The nozzle may be rotating, may be coated with titanium nitride and/or may be arranged outside the parallel drum 26, for example for heating air or other medium, which in turn is used to heat the asphalt granulate in the parallel drum 26. In other embodiments, another type of suitable burner may be used.

The asphalt plant 10 comprises a storage tank 30 for liquid fuel. The storage tank 30 is connected to the burner 29 via a pipe 31 for transferring the fuel from the storage tank 30 to the burner 29. Thus, the burner 29 is designed for burning the fuel while heating the parallel drum 26 and/or any material arranged therein. For example, bio-oil free of fossil fuels is used as fuel, in other embodiments, any other type of suitable fuel may be used.

In the embodiment shown in Fig. 1, the burner 15 of the drying drum 13 is connected to the storage tank 30 for liquid fuel via a pipe 32 for transferring liquid fuel from the storage tank 30 to the burner 15 of the drying drum 13. Thus, the burner 15 of the drying drum 13 is designed for burning liquid fuel while heating any material arranged in the drying drum 13. In such an embodiment, the storage tank 30 is thus connected to both the burner 15 of the drying drum 13 and the burner 29 of the parallel drum 26, wherein both the burner 15 of the drying drum 13 and the burner 29 of the parallel drum 26 are designed for burning liquid fuel, such as bio-oil or any other suitable fuel. Alternatively, the burner 15 of the drying drum 13 is connected to a separate fuel tank. According to an alternative embodiment, the burner 15 of the drying drum 13 is designed to burn another fuel, such as pellets, fossil oil or the like.

In the embodiment shown, the asphalt plant 10 comprises a pump 33 and a pre-heating unit 34 for preheating the fuel before the combustion thereof in the burner 29. The pump 33 is designed to pump the fuel to the preheating unit 34. In the embodiment shown, the pump 33 is arranged between the storage tank 30 and the pre-heating unit 34. Alternatively, the preheating unit 34 is directly connected to the storage tank. 30.

The storage tank 30 is connected to the burner 29 via the pipe 31. The pipe 31 is connected to the storage tank 30 via the preheating unit 34 for heating the fuel before feeding it to the burner 29 via pipe 31.

When asphalt is being produced, crushed stone material is provided to the drying drum 13, and asphalt granules are provided into the parallel drum 26. The asphalt granules are heated by means of the heater 29. After heating in the parallel drum 26, the heated asphalt granules are passed from the parallel drum 26 to the mixer 21. Also, the stone material is transported from the drying drum 13 to the mixer 21. In the mixer 21, the stone material and the heated reclaimed asphalt are mixed with bitumen and any other additives to form asphalt mix.

In order to produce asphalt containing lignin, there are several options, presented below. As stated above, a portion of the fossil bitumen is replaced by lignin. Thus, the asphalt plant 10 is provided with a storage means 35 for lignin. The storage means may be any suitable storage means, e.g. one or more of a compartment, a silo, a container or similar. Several storage options are possible due to the moisture in the lignin, which makes it easier to store. For example, it does not dust, and it is not explosive which means that these factors do not need to be taken into account when choosing the storage means. If the asphalt plant comprises a fiber dispenser, this may be used to store and dispense the lignin.

The asphalt plant 10 is further provided with conveyor means 36 for transporting the lignin. The conveyor means may be any suitable conveyor such as a belt, a slide, a feed screw or similar. In Fig. 1, the conveyor means 36 is provided to transport lignin from the storage means 35 to the parallel drum 26.

In other embodiments, not shown, the conveyor means may be arranged to transport the lignin into the mixer 21 instead. This may for example be the case if the asphalt plant is not provided with a parallel drum, or if it for some reason is preferred to supply the lignin into the mixer instead of into the parallel drum.

In order to solve the problem of potential mold growth in the lignin, anti-mold agents or preservatives are added to the lignin. The anti-mold agents are for example sodium benzoate, sorbic acid, and/or potassium sorbate.

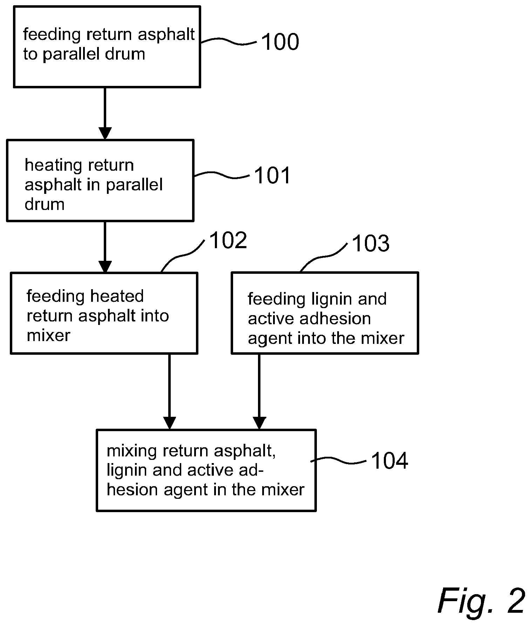

A first method, shown in Fig. 2, comprises feeding 100, by means of conveyor belt 14, reclaimed asphalt to the parallel drum 26 and heating 101, by means of burner 29, the reclaimed asphalt therein. The reclaimed asphalt is heated to approximately about 140-160°C. Thereafter, the heated reclaimed asphalt is fed 102 via outlet 28 into the mixer 21. Lignin is fed 103 from the storage compartments 35 by means of conveyor means 36 into the mixer 21. Bitumen, and possibly other additives are also fed into the mixer 21 and all of said components are mixed 104.

In this embodiment, approximately 10% of the fossil bitumen is replaced by the double amount of lignin, provided that the lignin has a moisture content of approximately 50%. The ratio of 1:2 between the amount of removed bitumen and the added lignin is due to the water content in the lignin, a major part of which is evaporated in the production process. If the lignin has another moisture content, the amount of lignin is adjusted accordingly. A dryer lignin is added in a smaller amount, due to a lower water content. Thus, less evaporates takes place during the production process. In one embodiment, the removed amount of bitumen is replaced with a corresponding equal amount of dry weight lignin, i.e. 100%. In another embodiment, the removed amount of bitumen is replaced with an amount of 90-110% lignin, based on the dry weight of the lignin.

Surprisingly, the moist lignin mixes well in the asphalt mix and it provides the finished asphalt with improved compaction properties. This method is thus advantageous in that it is suitable for high moisture lignin, comprising approximately 40-60% moisture. It is advantageous in that the method does not require a prior step of drying the lignin, but instead, the lignin may be used directly in its original, natural state.

However, the asphalt produced with moist lignin has lower water sensitivity and impaired adhesion properties compared to traditionally produced asphalt. Further, the adhesion agents used in asphalt production act adhesive between bitumen and stone material provided that the materials are dry.

In order to solve these problems, the inventors of the present invention have through insightful reasoning and inventive thinking combined the moist lignin with an active adhesion agent. This agent has the property of acting adhesive also in the presence of moisture. The adhesion agent may be any suitable adhesion agent, preferably one or more of amines or diamines. The active adhesive agent is preferably provided in an amount of 0.02-0.1 % of the total asphalt mix.

The combination of providing 103 lignin with a high degree of moisture directly into the mixer 21 together with the active adhesive agent results in an efficient production method of a more environmentally beneficial asphalt with high durability and resistance.

The asphalt produced by the above described method has been tested and compared to regularly produced asphalt. The tests have shown that the asphalt produced by this method shows similar results regarding water sensitivity, corresponding to the durability and (weather-) resistance of the asphalt, as conventionally produced asphalt. The stability of the asphalt comprising lignin turned out to be somewhat lower than conventionally produced asphalt, but sufficient for paving on low to medium trafficked streets and roads.

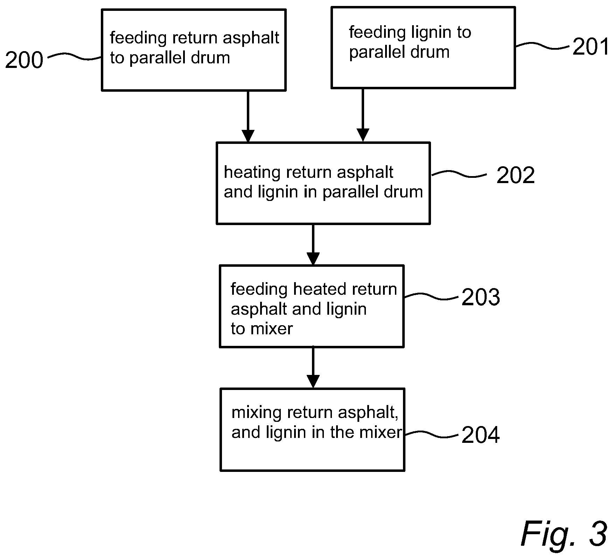

In Fig. 3 another option of producing asphalt containing lignin is shown. The method comprises feeding 200, by means of conveyor belt 14, reclaimed asphalt and feeding 201, by means of conveyor means 36, lignin to the parallel drum 26. The reclaimed asphalt and the lignin are then heated 202, by means of burner 29, to approximately about 140-160°C in the parallel drum 26 and are thereafter fed 203, through outlet 28, to the mixer 21, where the reclaimed asphalt, the lignin, crushed stone material and possibly other additives, are mixed 204 to form asphalt mix.

The moisture content of the lignin when it is added to the parallel drum 26 may e.g. be approximately 50%. Advantageously, since the lignin is heated in the parallel drum 26, a portion of the moisture content is evaporated before the reclaimed asphalt and lignin are fed 203 to the mixer 21. Thus, a smaller amount lignin is required, compared to the method described in Fig. 2, to substitute the removed bitumen portion. Preferably 10% of the bitumen is substituted with lignin. Preferably, the ratio of bitumen compared to lignin is 9:1. Since part of the moisture is removed in the parallel drum 26, it is possible to add larger amounts of lignin, i.e. substitute a larger portion of the bitumen in the asphalt mix.

Another asphalt production method is a semi-warm production process in which a soft bitumen is used. The soft bitumen has a lower viscosity compared to regular bitumen. This has the advantage that it may be mixed at lower temperatures. Thus, a production temperature of about 80-100°C is enabled, compared to the warm production taking place at temperatures of about 140-160°C. It is beneficial to use a semi-warm production process since it requires less heating and thus less energy. Also, the soft bitumen has the advantage of being self-healing throughout the lifetime of the paving. However, the asphalt produced in the semi-warm process has somewhat lower strength making it suitable for less exposed locations. It has turned out that the semi-warm production process is suitable for asphalt containing lignin. Tests were made, where the asphalt mix comprises 50% reclaimed asphalt, 50% raw material and where 10% of the fossil soft bitumen was substituted with lignin. The asphalt produced in the tests turned out to have good stability values and durability.

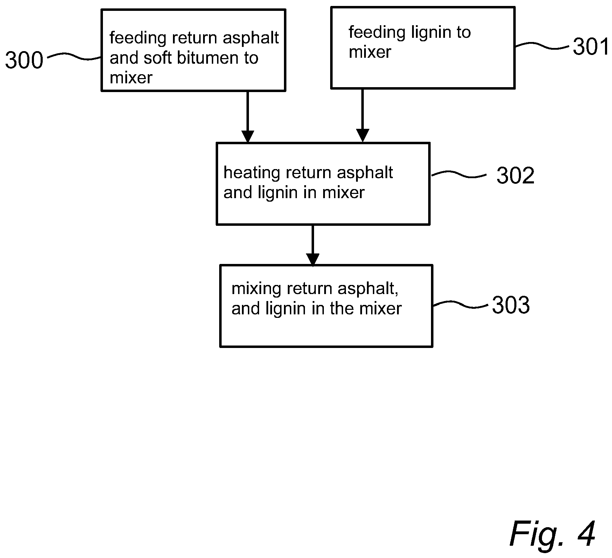

In Fig. 4, a flowchart of a production process of asphalt comprising lignin and soft bitumen is shown. In this case, the asphalt plant is not equipped with a parallel drum, and thus the reclaimed asphalt and the soft bitumen are fed 300 to the mixer. The lignin is also fed 301 to the mixer. All components are heated 302, preferably to a temperature of 80-100°C, and mixed 303 in the mixer. This production method is suitable when the asphalt plant is not equipped with a parallel drum.

Test have also been performed to investigate the properties of reclaimed asphalt comprising lignin. Bitumen was recycled from conventional asphalt, and from asphalt comprising lignin. The bitumen recycled from asphalt containing lignin was stiffer but had a higher elasticity compared to the bitumen recycled from conventional asphalt. This indicates that the lignin may be used as a rejuvenator in the asphalt granules.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present disclosure.

## Claims

1. A method for producing asphalt mix in an asphalt plant (10) comprising the steps of:
- providing (100; 200; 300) reclaimed asphalt material;
- providing (103; 201; 301) lignin having a moisture content of approximately 10-60% by weight;
- heating (101; 202; 302) the reclaimed asphalt material and the lignin; and
- mixing (104; 204; 303) the reclaimed asphalt material and the lignin with crushed stone material and bitumen to form asphalt mix.

2. The method according to claim 1, comprising the steps of:
- feeding the reclaimed asphalt material into one of a parallel drum (26) or a mixer (21);
- feeding the lignin into one of the parallel drum (26) or the mixer (21); and
- if the reclaimed asphalt material and/or the lignin is fed to the parallel drum, feeding the reclaimed asphalt material and/or the lignin to the mixer (21); and
- wherein the step of mixing takes place in the mixer (21).

3. The method according to claim 1 or 2, wherein the moisture content of the lignin preferably is 20-50% by weight, more preferred 30-40% by weight.

4. The method according to claim 1-3, wherein the step of heating comprises heating (101; 202) the material provided in the parallel drum (26) to a temperature of 140-160°C.

5. The method according to claims 1-3, wherein the lignin is provided into the mixer (21), wherein the bitumen comprises soft bitumen, and wherein the step of heating comprises heating (302) the material in the mixer (21) to a temperature of between 80-100°C.

6. The method according to any one of the preceding claims, further comprising a step of providing an active adhesive agent for forming an adhesion between the reclaimed asphalt material and the lignin.

7. The method according to claim 6, wherein the active adhesive agent is one of amines or diamines or a combination thereof.

8. The method according to claim 6 or 7, wherein the active adhesive agent is added in an amount of 0.02-0.1 % by weight of the total asphalt mix.

9. The method according to any one of the preceding claims, wherein the lignin is added in a ratio of 0.5-3% by weight of the total asphalt mix.

10. The method according to any one of the preceding claims, wherein the lignin is added as a replacement for a part of the bitumen for reducing the amount of material of petroleum origin, preferably 5-50%, more preferred 10-30%, and most preferred 10-20% by weight of the bitumen is replaced by lignin.

11. The method according to any one of the preceding claims, wherein the method comprises the steps of:
- feeding (100) reclaimed asphalt material to the parallel drum (26),
- heating (101) said reclaimed asphalt material in the parallel drum (26) by means of a heater (29),
- feeding (102) said heated reclaimed asphalt material to the mixer (21), and
- feeding said lignin to the mixer (21).

12. The method according to any one of claims 1-10, wherein the method comprises the steps of:
- feeding (200) said reclaimed asphalt material to the parallel drum (26),
- feeding (201) said lignin to the parallel drum (26),
- heating said reclaimed asphalt material and said lignin in the parallel drum (26) by means of a heater (29), and
- feeding (203) said heated reclaimed asphalt material and said heated lignin to the mixer (21).

13. The method according to any one of claims 1-10, wherein the method comprises the steps of:
- feeding (300) said reclaimed asphalt to the mixer (21),
- feeding (301) said lignin to the mixer (21),
- heating said reclaimed asphalt material and said lignin in the mixer (21), and
- mixing (303) said reclaimed asphalt material and said lignin in the mixer (21).

14. Asphalt composition produced by the method according to any one of the claims 1-14, comprising stone material, bitumen and lignin, wherein the lignin has a moisture content of 10-60% by weight.

15. The asphalt composition according to claim 15, wherein the moisture content of the lignin preferably is 20-50% by weight and most preferred approximately 30-40% by weight.

16. The composition according to claims 14-15, wherein the lignin constitutes 0.5-3% by weight of the composition.

17. The composition according to claims 14-16, wherein the amount of lignin is adjusted to replace a portion of the bitumen corresponding to 5-50%, preferably 10-30%, most preferred 10-20% by weight of the bitumen.
